# EUROPÄISCHE PATENTSCHRIFT

(11) **EP 2 807 459 B1**
(45) Veröffentlichungstag und Bekanntmachung des Hinweises auf die Patenterteilung: **13.09.2017**
(21) Anmeldenummer: 13700197.0
(22) Anmeldetag: 11.01.2013
(51) Int. Cl.: G01G 17/02, G01G 13/24, B65B 1/32, B65B 37/08

(54) **VERFAHREN UND VORRICHTUNG ZUR BILDUNG VON PORTIONEN AUS FASERIGEM GUT UND ZUR BEFÜLLUNG VON AUFNAHMEN EINES FÖRDERERS MIT DEN GEBILDETEN PORTIONEN**
METHOD AND DEVICE FOR FORMING PORTIONS OF FIBROUS MATERIAL AND FOR FILLING RECEPTACLES OF A CONVEYOR WITH THE FORMED PORTIONS
PROCÉDÉ ET DISPOSITIF POUR FORMER DES PORTIONS DE MATIÈRE FIBREUSE ET POUR REMPLIR DES RÉCEPTACLES D'UN CONVOYEUR AVEC LES PORTIONS FORMÉES

(30) Priorität: 23.01.2012 DE 102012001124
(43) Veröffentlichungstag der Anmeldung: 03.12.2014
(73) Patentinhaber: Focke & Co. (GmbH & Co. KG), 27283 Verden (DE)
(72) Erfinder: LEIFHEIT, Axel, 27336 Häuslingen (DE); DOSE, Thomas, 25524Itzehoe (DE)
(74) Vertreter: Aulich, Martin
(86) Internationale Anmeldenummer: PCT/EP2013/000069
(87) Internationale Veröffentlichungsnummer: WO 2013/110435

(56) Entgegenhaltungen:
- DE-A1- 2 338 374
- DE-A1-102007 023 511
- DE-B1- 1 632 189
- GB-A- 2 310 729
- JP-A- H1 054 750
- US-B1- 6 502 013

## Beschreibung

Die vorliegende Erfindung betrifft ein Verfahren zur Bildung von Portionen aus faserigem Gut, insbesondere Tabak, und zur Befüllung von Aufnahmen eines Förderers mit den gebildeten Portionen, bei dem das Gewicht einer in eine der Aufnahmen zu füllenden Gutportion des faserigen Guts eine vorbestimmte Bedingung erfüllen muss, bei dem eine vorportionierte Grobportion des faserigen Guts einem Grobportionswiegeorgan zugeführt und mit dem Grobportionswiegeorgan gewogen wird, bei dem für den Fall, dass das Gewicht der gewogenen Grobportion die vorbestimmte Bedingung nicht erfüllt, der Grobportion eine solche zusätzliche Menge faserigen Guts hinzugefügt wird, dass das Gesamtgewicht aus Grobportion und zusätzlicher Menge die vorbestimmte Bedingung erfüllt, und bei dem die Grobportion zusammen mit dieser zusätzlichen Menge als Gutportion in eine der Aufnahmen des Förderers gefüllt wird. Des Weiteren betrifft die Erfindung eine Vorrichtung zur Bildung solcher Portionen und zur Befüllung von Aufnahmen eines Förderers mit den gebildeten Portionen.

Eine Vorrichtung, die nach einem derartigen Verfahren arbeitet, ist beispielsweise in der DE 10 2007 023 511 A1 beschrieben. Mit dem dort gezeigten Grobportionswiegeorgan wird zunächst eine vorportionierte Grobportion gewogen. Insofern das Gewicht dieser vorportionierten Grobportion nicht einem vorgegebenen Nominalgewicht entspricht, wird der Grobportion - während sich die Grobportion in dem Wiegeorgan befindet - durch ein Feindosierungsaggregat zusätzliches faseriges Gut hinzugefügt. Dies geschieht so lange, bis die in dem Grobportionswiegeorgan befindliche Gesamtmenge aus Grobportion und zusätzlicher Menge im Wesentlichen dem Nominalgewicht entspricht. Anschließend wird die Gesamtmenge aus dem Grobportionswiegeorgan ausgefördert, sodass das Wiegeorgan für die nächste Messung zur Verfügung steht.

Ausgehend hiervon ist es Aufgabe der vorliegenden Erfindung, ein derartigen Verfahren sowie eine entsprechende Vorrichtung weiterzuentwickeln, insbesondere im Hinblick auf verbesserte Leistungswerte.

Diese Aufgabe wird gelöst durch ein Verfahren mit den Merkmalen des Anspruchs 1 sowie eine Vorrichtung mit den Merkmalen des Anspruchs 10.

Das eingangs genannte Verfahren ist erfindungsgemäß dadurch gekennzeichnet, dass nach Maßgabe der zu erfüllenden, vorbestimmten Bedingung eine der hinzuzufügenden zusätzlichen Menge entsprechende Feinportion aus faserigem Gut erst in einem separaten Vorgang abgewogen wird, bevor sie später bzw. nachfolgend der gewogenen Grobportion zur Bildung der Gutportion hinzugefügt wird. Weiter wird die Grobportion dabei von dem Grobportionswiegeorgan an einen Zwischenspeicher übergeben. Während sich die abgewogene Grobportion in dem Zwischenspeicher befindet, kann die der abgewogenen Grobportion hinzuzufügende Feinportion separat abgewogen werden.

Anders als im Stand der Technik werden daher dann, wenn die gewogene Grobportion einer bestimmten Bedingung für eine Gutportion, wie etwa einer Sollgewichtsvorgabe, nicht entspricht, nicht der in dem Grobportionswiegeorgan befindlichen Grobportion ungewogene Mengen an zusätzlichem faserigen Gut hinzugefügt und jeweils dann die Gesamtmenge aus zusätzlicher Menge und Grobportion gemessen. Vielmehr wird in einem separaten Abwiegevorgang zunächst eine Feinportion gebildet bzw. abgemessen, die bereits ein Gewicht aufweist, das bei späterem Hinzufügen zu der gewogenen Grobportion zu einer Gesamtmenge führt, die die vorbestimmte Bedingung für eine Gutportion erfüllt.

Es wird demnach in einem separaten Abwiegevorgang erst eine Feinportion gebildet und diese anschließend der gewogenen Grobportion hinzugefügt.

Dieses Vorgehen hat unter anderem den Vorteil, dass nach dem Wiegen der Grobportion diese Grobportion sofort aus dem Grobportionswiegeorgan entfernt werden kann und letztere somit sofort für neue Wiegevorgänge zur Verfügung stehen kann. Denn mit dem Grobportionswiegeorgan müssen - anders als im Stand der Technik - nicht weitere Messungen durchgeführt werden, um das Gewicht der Gesamtmenge aus bereits gewogener Grobportion und (mittels eines Feindosierungsaggregats) hinzugefügter, zusätzlicher Menge faserigen Guts zu bestimmen.

Unter dem Begriff "Wiegen" wird im Rahmen dieser Anmeldung derjenige Messvorgang verstanden, mit dem das Gewicht einer bestimmten Menge faserigen Guts bestimmt wird. In Abgrenzung dazu wird unter "Abwiegen" der Gesamtvorgang verstanden, mit dem eine bestimmte Portion faserigen Guts eines bestimmten gewünschten Gewichts gebildet bzw. abgemessen wird. Ein Abwiegevorgang in diesem Sinne umfasst dabei das ein- oder mehrfache Zuführen von faserigem Material zu dem entsprechenden Wiegeorgan sowie das Wiegen der während des Abwiegevorgangs in dem Wiegeorgan jeweils befindlichen Menge faserigen Guts. Bei einem mehrfachen Hinzufügen faserigen Guts zu dem Wiegeorgan während eines Abwiegevorgangs wird dabei in der Regel bei jeder Erhöhung der in dem Wiegeorgan befindlichen Gesamtmenge ein erneutes Wiegen stattfinden. Entsprechend kann ein Abwiegevorgang ein oder mehrere Wiegevorgänge umfassen.

Zweckmäßigerweise wird die der hinzuzufügenden zusätzlichen Menge an faserigem Gut entsprechende Feinportion unter Beteiligung eines separaten Feinportionswiegeorgans abgewogen.

Wie weiter oben bereits angedeutet, wird die gewogene Grobportion bevorzugt unmittelbar nach ihrem Wiegen unter Freigabe des Grobportionswiegeorgans aus diesem ausgefördert. Hierdurch steht das freigegebene Grobportionswiegeorgan wieder für einen nächsten Wiegevorgang zur Verfügung.

Die Grobportion wird von dem Grobportionswiegeorgan an einen Zwischenspeicher übergeben. Während sich die abgewogene Grobportion in dem Zwischenspeicher befindet, kann die der abgewogenen Grobportion hinzuzufügende Feinportion separat abgewogen werden.

Dabei beginnt das Abwiegen der Feinportion bereits, während die Grobportion an den Zwischenspeicher übergeben wird, das heißt, während des entsprechenden Förder- bzw. Übergabevorgangs.

Aus der später abgewogenen Feinportion sowie der ihr zugeordneten, bereits gewogenen Grobportion wird nachfolgend die Gutportion gebildet. Hierzu werden die jeweils in separaten bzw. eigenen Wiege- und Abwiegevorgängen gewogene Grobportion bzw. abgewogene Feinportion in dieselbe Aufnahme eines gemeinsamen Förderers übergeben.

Was den weiteren steuerungstechnischen Ablauf der erfindungsgemäßen Portionsbildung betrifft, so wird vorzugsweise anhand der vorbestimmten Bedingung für eine Gutportion und anhand des Gewichts der gewogenen Grobportion eine Sollwertvorgabe oder eine Grenzwertvorgabe für das Gewicht der abzuwiegenden Feinportion ermittelt.

Die vorbestimmte Bedingung für eine Gutportion kann beispielsweise sein, dass deren Gewicht einen bestimmten Sollwert aufweisen soll oder dass deren Gewicht eine bestimmte Grenzwertvorgabe einhalten soll. Unter Grenzwertvorgabe wird auch die Vorgabe eines Werteintervalls mit oberem und unterem Grenzwert gefasst, innerhalb dessen sich das Gewicht einer Gutportion befinden soll.

Da nach Abwiegen der vorportionierten Grobportion deren Gewicht feststeht, kann aus der vorbestimmten Bedingung für eine Gutportion dann eine entsprechende Sollwertvorgabe oder eine entsprechende Grenzwertvorgabe für das Gewicht der abzuwiegenden Feinportion ermittelt werden.

Wenn beispielsweise die vorbestimmte Bedingung (Sollwertvorgabe) für eine Gutportion 50 Gramm betragen sollte, das Gewicht der gewogenen Grobportion aber 46 Gramm beträgt, so könnte entsprechend eine Sollwertvorgabe für die abzuwiegende Feinportion 4 Gramm betragen.

Was das entsprechende Abwiegen der zu der gewogenen Grobportion passenden Feinportion betrifft, so wird bevorzugt im Rahmen des Abwiegens dem Feinportionswiegeorgan zunächst eine erste Menge zusätzlichen faserigen Guts zugeführt. Das Gewicht dieser ersten Menge wird dann mit dem Feinportionswiegeorgan gemessen. Anschließend wird der gemessene Wert mit der für die Feinportion ermittelten Sollwertvorgabe oder der Grenzwertvorgabe verglichen.

Für den Fall, dass dieser Vergleich ergibt, dass die genannte erste Menge zusätzlichen faserigen Guts die Sollwertvorgabe oder die Grenzwertvorgabe für die Feinportion nicht erfüllt, kann dann, wenn die erste Menge gegenüber der Vorgabe untergewichtig ist, der ersten Menge eine weitere Menge an faserigem Gut hinzugefügt werden. Für den Fall, dass die erste Menge gegenüber der Vorgabe übergewichtig ist, kann sie als Fehlportion ausgeschleust werden.

Falls der genannten ersten Menge eine weitere Menge hinzugefügt wird, wird mit dem Feinportionswiegeorgan das Gewicht der sich ergebenden Gesamtmenge aus erster Menge und weiterer Menge gemessen.

Für den Fall, dass diese Gesamtmenge die Sollwertvorgabe oder die Grenzwertvorgabe nicht erfüllt, kann - analog zu dem obigen Ablauf- wiederum (bei Untergewicht) entweder der Gesamtmenge mindestens eine weitere Menge an faserigem Gut hinzugeführt oder (bei Übergewicht) die Gesamtmenge als Fehlportion ausgeschleust werden.

Das Hinzufügen von weiteren Mengen und die erneute Messung der Gesamtmenge wird bevorzugt solange wiederholt, bis die Sollwert- oder Grenzwertvorgabe erfüllt ist oder nicht mehr erfüllbar ist (Übergewicht) und die Gesamtmenge ausgeschleust wird. In dem letzteren Fall wird bevorzugt der gesamte Abwiegevorgang mit neuen zusätzlichen Mengen wiederholt.

Was das Grobportionswiegeorgan und das Feinportionswiegeorgan betrifft, verfügen diese jeweils über einen Förderrevolver, bevorzugt ein Zellenrad. Weiter verfügen das Grobportionswiegeorgan und das Feinportionswiegeorgan jeweils über eine eigene Waage. Jede der beiden bzw. der mindestens zwei Waagen wirkt dabei mit dem ihr jeweils zugeordneten Förderrevolver funktional derart zusammen, dass in einer Aufnahme des jeweiligen Förderrevolvers befindliches faseriges Gut gewogen werden kann. Mit anderen Worten sind das Grobportionswiegeorgan und das Feinportionswiegeorgan zwei separate Organe, wobei jedes Organ jeweils eine eigene bzw. separate Waage sowie jeweils einen eigenen bzw. separaten Förderrevolver aufweist.

Weitere Merkmale der vorliegenden Erfindung ergeben sich aus den beigefügten Patentansprüchen, aus der nachfolgenden Beschreibung eines bevorzugten Ausführungsbeispiels der Erfindung sowie aus den beigefügten Zeichnungen. Es zeigt:
- Fig. 1: eine Gesamtansicht einer Vorrichtung zur Bildung und zum Abtransport von Tabakportionen, die mit dem erfindungsgemäßen Verfahren betrieben wird, in Vorderansicht,
- Fig. 2: einen vergrößerten Ausschnitt aus der Fig. 1 zu einem ersten Zeitpunkt,
- Fig. 3: den Ausschnitt aus Fig. 2 zu einem zweiten, späteren Zeitpunkt,
- Fig. 4: eine schematische Darstellung, in der für verschiedene Organe der Vorrichtung aus Fig. 1 des Betriebs derselben zeitabhängig verschiedene Betriebszustände dargestellt und einander gegenüber gestellt sind.

Die Zeichnungen betreffen eine Vorrichtung 10 zur Bildung von einzelnen Portionen aus faserigem Gut, vorliegend Schnitt-Tabak, und zum nachfolgenden Abtransport der Portionen.

Die Vorrichtung 10 weist vorliegend eine Befüllungsstation 11 auf, an der aus einer nicht dargestellten Lösetrommel zugeführter Tabak taktweise gewogen, portioniert und in Aufnahmen 12, vorliegend nach oben offenen, bevorzugt trichterartigen Bechern einer Becherkette, eines Förderers 13 gefüllt wird. Der Förderer 13 ist dabei vorliegend als Endlos-Förderer ausgebildet.

Die einzelnen Portionen in den jeweiligen Aufnahmen 12 werden mit dem Förderer 13 einem nicht dargestellten Beutelpacker zur weiteren Verarbeitung zugeführt, nämlich insbesondere zur Verpackung der Tabakportionen in geeignete Beutel.

Der aus der nicht dargestellten Lösetrommel austretende Tabakstrom wird zunächst einem oberhalb des Förderers 13 angeordneten Vorratsbehälter 14 zugeführt.

Innerhalb des Vorratsbehälters 14 bzw. innerhalb eines aufrechten Förderschachtes 15 wird aus dem Tabak des Vorratsbehälters 14 durch konvergierende Gestaltung der Förderbahn in Abwärtsrichtung und durch weitere, hier nicht näher erläuterte Maßnahmen, zunächst ein Tabakfließ gebildet und anschließend ein Tabakstrang, der in dem Förderschacht 15 in Vertikalrichtung nach unten gefördert wird.

Der an dem unteren Ende des Förderschachtes 15 austretende Tabakstrang gelangt in den Bereich einer Trennvorrichtung 16. Die Trennvorrichtung 16 weist jeweils von den Seiten her in die Tabakstränge eintretende Trennkämme auf.

Mittels dieser Trennvorrichtung 16 werden einzelne Grobportionen 17 des Tabaks abgetrennt bzw. vorportioniert. Diese vorportionierten Grobportionen 17 sind in der Regel gegenüber Tabak-Gutportionen 35, die später in die Aufnahmen 12 gefüllt werden sollen, untergewichtig.

Der Vorratsbehälter 14, der Förderschacht 15 sowie die Trennvorrichtung 16 können insgesamt beispielsweise so ausgebildet sein, wie dies in der DE 33 16 176 A1 beschrieben ist. Die in der Regel überwiegend untergewichtigen, vorportionierten Grobportionen 17 werden jeweils einem zentralen Verteilerorgan 18 zugeführt. Das Verteilerorgan 18 ist vorliegend als drehbar angetriebener Förderrevolver ausgebildet.

Bei dem Verteilerorgan 18 handelt es sich konkret um ein um eine horizontale Drehachse drehbares Zellenrad mit mehreren, vorliegend drei um jeweils um 120° in Umfangsrichtung zueinander versetzten Zellen zur Aufnahme der vorportionierten Tabakgrobportionen 17. Die Zellen oder Taschen sind auf deren in radiale Richtung außen liegenden Seiten offen.

Das Verteilerorgan 18 weist verschiedene Betriebszustände auf. In nach oben gerichteten Positionen kann jeweils eine der in diesen Positionen jeweils nach oben zeigenden Zellen befüllt werden. Das Verteilerorgan 18 kann ausgehend davon so gedreht werden, dass die zuvor nach oben gerichtete Zelle schräg nach unten zeigt. Eine zuvor in der nach oben zeigenden Zelle befindliche Tabak-Grobportion 17 kann dann in der nach schräg unten gerichteten Stellung durch deren Eigengewicht aus der Zelle entweichen.

In einer nach oben gerichteten Position kann das Verteilerorgan 18 daher eine einzelne, aus dem Förderschacht 15 stammende Tabak-Grobportion 17 aufnehmen und für eine vorgegebene Zeitdauer halten. Aus dieser Halteposition heraus kann das Verteilerorgan 18 in Uhrzeigerrichtung oder entgegen der Uhrzeigerrichtung in die nach schräg unten gerichteten Positionen rotiert werden.

Je nach Drehrichtung wird die in der entsprechenden Zelle positionierte Grobportion 17 zu einem von zwei, jeweils seitlich versetzt unterhalb des Verteilerorgans 18 angeordneten Grobportionswiegeorganen 19a, 19b gefördert.

Die Grobportionswiegeorgane 19a, 19b weisen jeweils Wiegerevolver 20a, 20b auf, die in ihrem Aufbau dem Aufbau des Verteilerorgans 18 entsprechen. Auch sie verfügen daher jeweils über entsprechende Zellen zur Aufnahme von Tabakportionen. Die von dem Verteilerorgan 18 stammende Grobportion 17 fällt demnach entsprechend in eine nach oben gerichtete Zelle des Wiegerevolvers 20a bzw. 20b.

Neben den Wiegerevolvern 20a, 20b verfügen die Grobportionswiegeorgane 19a, 19b noch über mit den Wiegerevolvern 20a, 20b jeweils zusammenwirkende Waagen 23a, 23b. Mit Hilfe der Waagen 23a, 23b können die Gewichte der einzelnen Tabakportionen bestimmt werden, die jeweils in der nach oben gerichteten Zelle des jeweiligen Wiegerevolvers 20a, 20b angeordnet sind.

Jedem der Grobportionswiegeorgane 19a, 19b ist jeweils seitlich versetzt unterhalb des zugehörigen Wiegerevolvers 20a bzw. 20b ein eigenes Zwischenspeicherorgan 24a bzw. 24b zugeordnet. Die Zwischenspeicherorgane 24a, 24b entsprechen in ihrem Aufbau dem Aufbau des Verteilerorgans 18. Auch sie verfügen daher jeweils über entsprechende Zellen zur Aufnahme von Tabakportionen.

Die Zuordnung der Zwischenspeicherorgane 24a bzw. 24b zu den Wiegerevolvern 20a bzw. 20b ist dergestalt, dass jeweils eine bereits gewogene Grobportion 17 aus dem Wiegerevolver 20a oder dem Wiegerevolver 20b in die entsprechende Zelle des zugeordneten Zwischenspeicherorgans 24a bzw. 24b übergeben werden kann.

Jedem Zwischenspeicherorgan bzw. Zwischenspeicherrevolver 24a, 24b wiederum ist seitlich versetzt unterhalb jeweils ein eigenes Übergabeorgan 27a bzw. 27b zugeordnet. Auch die Übergabeorgane 27a bzw. 27b entsprechen in ihrem Aufbau jeweils dem Aufbau des Verteilerorgans 18. Auch sie verfügen daher jeweils über entsprechende Zellen zur Aufnahme von Tabakportionen.

Die Zuordnung der Übergabeorgane 27a bzw. 27b zu den jeweiligen Zwischenspeicherorganen 24a bzw. 24b ist derart ausgestaltet, dass Grobportionen 17 aus den Zwischenspeicherorganen 24a, 24b in die entsprechende Zelle des jeweils zugeordneten Übergabeorgans 27a, 27b übergeben werden können.

In die Übergabeorgane 27a, 27b können darüber hinaus Tabakportionen übergeben werden, die jeweils separaten Feinportionswiegeorganen 30a bzw. 30b entstammen. Die Feinportionswiegeorgane 30a, 30b umfassen dabei jeweils ähnlich wie die Grobportionswiegeorgane 19a, 19b jeweils Feinportionswiegerevolver 31a bzw. 31b sowie den Wiegerevolvern 31 bzw. 31b zugeordnete Waagen 32a bzw. 32b.

Mit Hilfe der Feinportionswiegeorgane 30a, 30b sowie mit Hilfe den Feinportionswiegeorganen 30a, 30b zugeordneten Feindosierungsaggregaten 33a bzw. 33b können Feinportionen aus Tabak gewichtsmäßig abgemessen bzw. abgewogen werden.

Wenn beispielsweise das Wiegen einer bestimmten Grobportion 17 in einem der Grobportionswiegeorgane 19a, 19b ergibt, dass die Grobportion 17 gegenüber einer gewünschten Gutportion 35, die schlussendlich in eine der Aufnahmen 12 gefüllt werden soll, untergewichtig ist, können mit Hilfe der separaten Feindosierungsaggregate 33a, 33b und den Wiegeorganen 30a, 30b Feinportionen 34 mit einem bestimmten Gewicht abgemessen bzw. abgewogen werden. Das Gewicht der Feinportion 34 kann beispielsweise derart bestimmt sein, dass es zusammen mit der bereits gewogenen Grobportion 17 das für eine Gutportion 35 gewünschte Gewicht ergibt.

Sofern die Feinportion 34 dann ordnungsgemäß abgewogen wurde, wird sie anschließend gleichzeitig zusammen mit der ihr zugeordneten, bereits gewogenen Grobportion 17 zu einer Gutportion 35 zusammengeführt, indem die beiden Revolver 31a, 24a bzw. 31b, 24b die Grobportionen 17 bzw. die passende Feinportion 34 jeweils in eine gemeinsame bzw. in ein und dieselbe Zelle des Übergabeorgans 27a bzw. 27b entleeren.

Jedes Feindosierungsaggregat 33a, 33b weist dabei ein schräg nach unten gerichtetes Band 28a bzw. 28b auf, über das aus dem Vorratsbehälter 14 über Zuführschächte 36a bzw. 36b dem Feindosierungsaggregat 33a bzw. 33b zugeführter Feintabak einer ersten Stachelwalze 37a bzw. 37b zugeführt wird.

Die jeweilige Stachelwalze 37a, 37b übernimmt den Tabak und arbeitet mit einer zweiten Stachelwalze 38a bzw. 38b zusammen. Durch ein nachfolgendes Stachelrad 39a bzw. 39b wird die entsprechende Tabaklage von der Stachelwalze 38a bzw. 38b abgehoben und in hier nicht näher beschriebener Weise in die entsprechende, nach oben gerichtete Zelle des Feinportionswiegerevolvers 31a bzw. 31b des Feinportionswiegeorgans 30a bzw. 30b gefüllt.

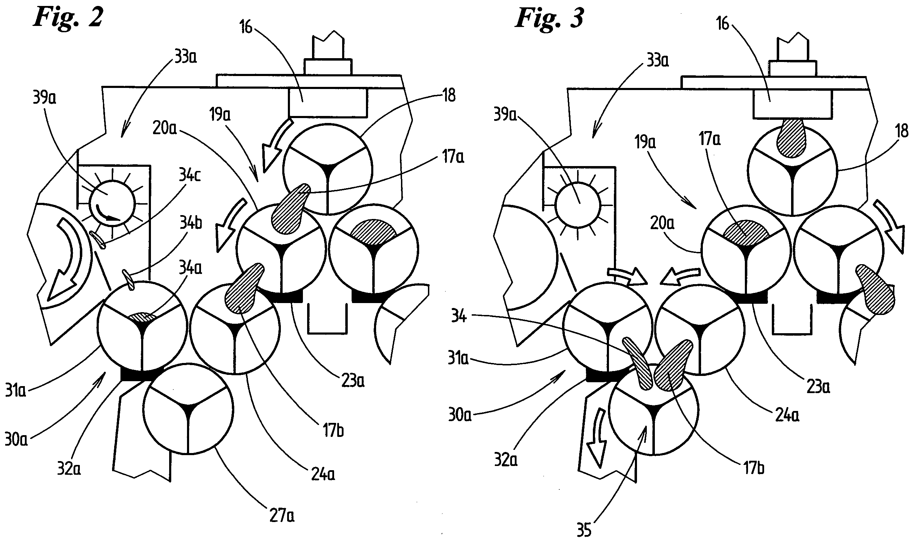

Die Einzelheiten der Abläufe im Rahmen der Portionsbildung der Tabakportionen werden später noch näher anhand der Fig. 2, 3 und 4 erläutert.

Nach Bildung der jeweiligen Gutportion 35 in dem Übergabeorgan 27a bzw. 27b wird die Gutportion 35 durch entsprechende Rotation des Übergabeorgans 27a bzw. 27b in eine unterhalb des jeweiligen Übergabeorgans 27a bzw. 27b angeordnete Zuführung 40a bzw. 40b entleert. Im vorliegenden Fall handelt es sich dabei um aufrechte Zuführschächte.

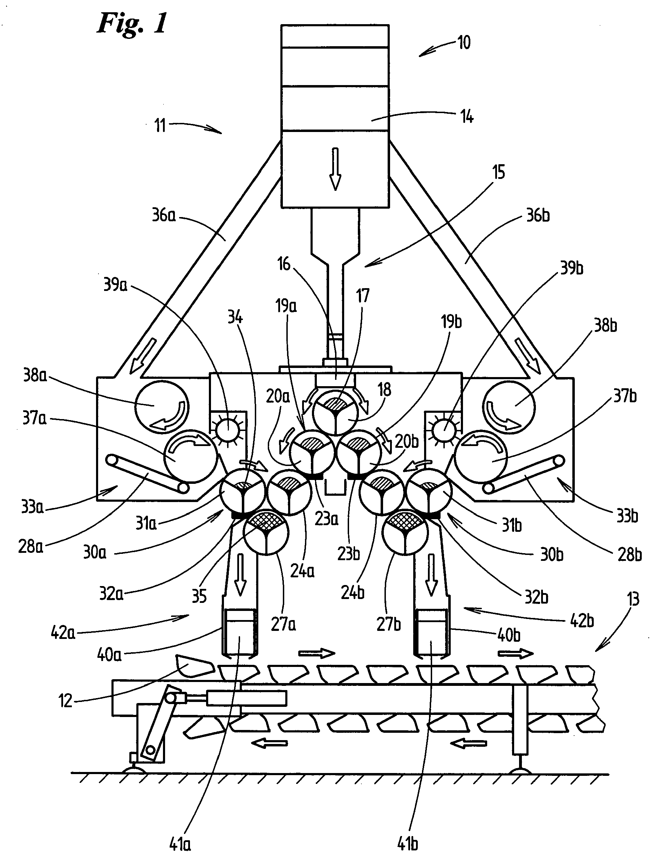

Die jeweilige Gutportion 35 wird dann über den Schacht 40a bzw. 40b einem zentralen Verteilerorgan 41a bzw. 41b zugefördert, wobei jedes Verteilerorgan 41a, 41b in gleicher Weise wie das Verteilerorgan 18 als Revolver mit mehreren Zellen ausgebildet ist. Die Verteilerorgane 41a, 41b werden vorliegend eingesetzt, da der Förderer 13 zweibahnig ausgebildet ist. Mit anderen Worten verfügt er über zwei parallel verlaufende Förderbahnen bzw. zwei parallel verlaufende Bahnen von Aufnahmen, von denen in der Fig. 1 nur die vordere Bahn zu erkennen ist. Die jeweilige Gutportion 35 wird dann jeweils einer von zwei in Förderrichtung auf gleicher Höhe, allerdings auf parallelen Bahnen angeordneten Aufnahmen 12 zugeführt.

Wie aus der vorherigen Beschreibung deutlich wird, sind jeder der beiden Förderbahnen des Förderers 13 in Förderrichtung letztlich zwei Befülllinien 42a bzw. 42b zugeordnet. Die Befülllinie 42b ist dabei in Förderrichtung des Endlosförderers 13 stromabwärts der Befülllinie 42a angeordnet. Die Befülllinie 42a wird im Wesentlichen durch die Organe bzw. Revolver 18, 20a, 24a, 27a bzw. 31a mit Tabakportionen versorgt, die Befülllinie 42b dagegen durch die Organe bzw. Revolver 18, 20b, 24b, 27b bzw. 31b.

Die Fig. 2 und 3 zeigen für die Befülllinie 42a nähere Einzelheiten von während des Betriebs der Vorrichtung 10 auftretenden Portionierungsvorgängen.

In der Momentaufnahme gemäß Fig. 2 wird gerade eine vorportionierte Grobportion 17a in die obere Zelle des Wiegerevolvers 20a des Grobportionswiegeorgans 19a übergeben. Die Übergabe wird in der bereits beschriebenen Weise ausgelöst durch entsprechende Drehung des Verteilerorgans 18.

Durch entsprechende Drehung des Wiegerevolvers 20a des Grobwiegeorgans 19a in Pfeilrichtung wurde die Übergabe einer in dem Grobwiegeorgan 19a bereits gewogenen Grobportion 17b in die obere Zelle des Zwischenspeicherrevolvers 24a ausgelöst.

Durch den zuvor durchgeführten Wiegevorgang ist der nicht dargestellten Steuerung der Vorrichtung 10 das Gewicht der Grobportion 17b bekannt. Im vorliegenden Beispiel beträgt dieses Gewicht 46 Gramm.

In der Steuerung ist zudem eine Bedingung hinterlegt, die eine Gutportion 35 erfüllen muss, um als Gutportion 35 gewertet werden zu können.

Beispielsweise kann hinterlegt sein, dass das Nominalgewicht einer solchen Gutportion 35 50 Gramm betragen soll. Gegebenenfalls sind zusätzlich geeignete Toleranzen hinterlegt.

In dem Beispiel der Fig. 2 erfüllt die Grobportion 17b diese Bedingung nicht. Die Steuerung veranlasst daher das Abwiegen einer Feinportion mit einem Gewicht, das zusammen mit dem gemessenen Gewicht der Grobportion 17b das Nominalgewicht der Gutportion 35 ergeben soll.

Das Abwiegen einer solchen passenden Feinportion 34 erfolgt mittels des Feindosierungsaggregats 33a und dem Feinportionswiegeorgan 30a.

Aus dem Gewicht der gewogenen Grobportion 17b sowie aus der Bedingung, dass die Gutportion 35 50 Gramm betragen soll, kann die Steuerung ermitteln, dass die Feinportion 34 in dem obigen Beispiel insgesamt ein Gewicht von 4 Gramm erreichen muss, um zusammen mit dem Gewicht von 46 Gramm der gewogenen Grobportion 17b eine Gutportion 35 von 50 Gramm bilden zu können.

Ausgehend hiervon wird für die abzuwiegende Feinportion 34 entsprechend eine geeignete Sollwertvorgabe von 4 Gramm ermittelt.

In einem ersten Schritt wird hierfür mittels des Feindosierungsaggregats 33a eine erste Teilmenge 34a an Tabak in die obere Zelle des Feinwiegerevolvers 31a gegeben. Anschließend wird das Gewicht dieser ersten Teilmenge 34a mit dem Wiegeorgan 30a ermittelt. Es ergibt sich, dass die Sollwertvorgabe von 4 Gramm nicht erreicht wird. Die Tabakteilmenge 34a ist untergewichtig und beträgt beispielsweise 3 Gramm.

Dementsprechend veranlasst das Feindosierungsaggregat 33a, der oberen Zelle des Feinportionswiegeorgans 30a eine nächste Teilmenge 34b an Tabak zuzuführen. Anschließend wird mit dem Feinportionswiegeorgan 30a das Gewicht der Gesamtmenge aus den Teilmengen 34a, 34b gemessen.

Im Beispiel der Fig. 2 erfüllt auch diese Gesamtmenge nicht die Sollwertvorgabe von 4 Gramm, da die Teilmenge 34b beispielsweise 0,5 Gramm beträgt.

Daher wird eine weitere Teilmenge 34c an Tabak hinzugefügt und das Gewicht der Gesamtmenge der Teilmengen 34a-34c bestimmt.

Die Teilmengen 34a, 34b, 34c erfüllen zusammen die Sollwertvorgabe von 4 g und bilden die Feinportion 34.

Zu einem gegenüber der Fig. 2 späteren Zeitpunkt gemäß Fig. 3 wird die Feinportion 34 wird durch geeignete Rotation des Wiegerevolvers 31a in Pfeilrichtung dem Übergabeorgan 27a zugeführt, nämlich dessen oberer Zelle.

Im Wesentlichen gleichzeitig wird die der Feinportion 34 zugeordnete, gewogene Grobportion 17b in dieselbe Zelle desselben Übergabeorgans 27a entleert, nämlich durch Rotation des Zwischenspeicherorgans 24a in Pfeilrichtung.

Gemeinsam bilden die Feinportion 34 und die gewogene Grobportion 17b eine Gutportion 35 mit dem Gewicht von 50 Gramm. Diese Gutportion 35 wird dann in der bereits weiter oben beschriebenen Weise über den Schacht 40a in die entsprechende Aufnahme 12 des Förderers 13 gefördert.

Wie in der Fig. 3 ebenfalls gut zu erkennen ist, ermöglicht der Einsatz des Zwischenspeicherorgans 24a die sofortige Entleerung des Grobportionswiegeorgans 19a bzw. des Wiegerevolvers 20a, nachdem der Wiegevorgang der Grobportion 17b abgeschlossen ist.

Für die Zeitdauer, in der die Feinportion 34 mit Hilfe des Feindosierungsaggregats 33a und dem Feinportionswiegeorgan 30a hergestellt bzw. gebildet wird, verbleibt die zugeordnete Grobportion 17b in dem Zwischenspeicherorgan 24a.

Die im Fertigungstakt nächst folgende Grobportion 17a kann dann schon in dem freigegebenen Grobportionswiegeorgan 19a bzw. dem Wiegerevolver 20a platziert und gewogen werden.

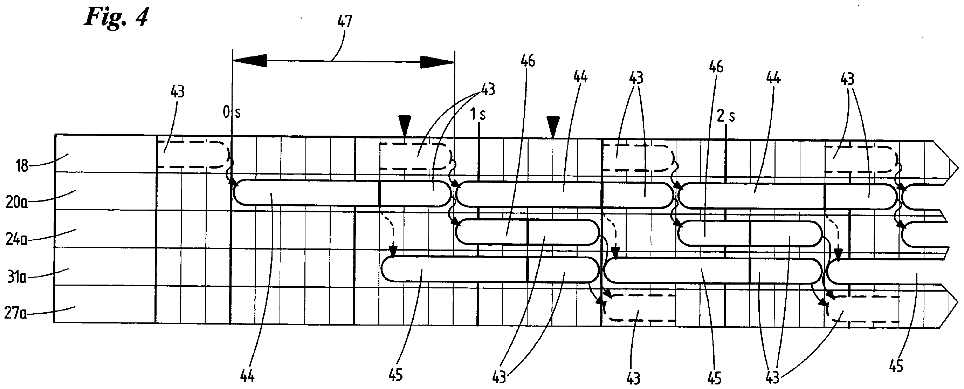

In dem Ablaufbild der Fig. 4 ist für die einzelnen Organe bzw. Revolver 18, 20a, 24a, 31a und 27a gezeigt, wie im Betrieb der Vorrichtung 10 die einzelnen Vorgänge der Portionsbildung zeitlich ablaufen.

In den Zeilen des Ablaufbildes der Fig. 4 sind von oben nach unten die einzelnen genannten Revolver 18, 20a, 24a, 31a und 27a aufgetragen. Die Symbole 43 stellen die Drehung des jeweiligen Revolvers dar mit anschließender Übergabe einer in dem Organ befindlichen Tabakportion an ein stromab folgendes Organ. Die Symbole 44 geben an, dass in dem Wiegerevolver 20a die Messung des Gewichts einer in ihm befindlichen Grobportion 17 erfolgt. Das Symbol 45 gibt für den Wiegerevolver 31a des Feinportionswiegeorgans 30a an, dass in ihm die Abmessung einer geeigneten Feinportion 34 erfolgt. Das Symbol 46 stellt Wartezeiten des Zwischenspeicherrevolvers 24a dar. Der Doppelpfeil 47 zeigt die Zeitdauer eines Maschinentaktes der Vorrichtung 10 an.

Wie gut zu erkennen ist, erfolgt zu Beginn eines Taktes (0s) in dem Revolver 20a des Grobportionswiegeorgans 19a die Messung einer vorportionierten Grobportion 17.

Anschließend wird der Revolver 20a gedreht. Er übergibt hierbei die gewogene Grobportion 17 an den Zwischenspeicherrevolver 24a.

Gut zu erkennen ist, dass bereits unmittelbar nach Beginn der entsprechenden Drehungs- und Übergabephase des Revolvers 20a der Vorgang des Abwiegens der zu der Grobportion 17 passenden Feinportion 34 mit Hilfe des Revolvers 31a des Feinportionswiegeorgans 30a beginnt.

Der Zwischenspeicherrevolver 24a ist während der Zeit des Abwiegens in einer Wartephase 46, bis der vorgenannte Vorgang des Abwiegens der Feinportion beendet ist.

Anschließend wird gleichzeitig die bereits beschriebene Drehung einerseits des Zwischenspeicherrevolvers 24a, andererseits des Revolvers 31a eingeleitet.

**Bezugszeichenliste**

| | | | |
|---|---|---|---|
| 10 | Vorrichtung | 33a | Feindosierungsaggregat |
| 11 | Befüllungsstation | 33b | Feindosierungsaggregat |
| 12 | Aufnahme | 34 | Feinportionen |
| 13 | Förderer | 34a | Teilmenge |
| 14 | Vorratsbehälter | 34b | Teilmenge |
| 15 | Förderschacht | 34c | Teilmenge |
| 16 | Trennvorrichtung | 35 | Gutportion |
| 17 | Grobportion | 36a | Zuführschacht |
| 17a | Grobportion | 36b | Zuführschacht |
| 17b | Grobportion | 37a | Stachelwalze |
| 18 | Verteilerorgan | 37b | Stachelwalze |
| 19a | Grobportionswiegeorgan | 38a | Stachelwalze |
| 19b | Grobportionswiegeorgan | 38b | Stachelwalze |
| 20a | Wiegerevolver | 39a | Stachelrad |
| 20b | Wiegerevolver | 39b | Stachelrad |
| 23a | Waage | 40a | Schacht |
| 23b | Waage | 40b | Schacht |
| 24a | Zwischenspeicherorgan | 41a | Verteilerorgan |
| 24b | Zwischenspeicherorgan | 41b | Verteilerorgan |
| 27a | Übergabeorgan | 42a | Befülllinie |
| 27b | Übergabeorgan | 42b | Befülllinie |
| 28a | Band | 43 | Symbol |
| 28b | Band | 44 | Symbol |
| 30a | Feinportionswiegeorgan | 45 | Symbol |
| 30b | Feinportionswiegeorgan | 46 | Symbol |
| 31a | Wiegerevolver | 47 | Doppelpfeil |
| 31b | Wiegerevolver | | |
| 32a | Waage | | |
| 32b | Waage | | |

## Patentansprüche

1. Verfahren zur insbesondere taktweisen Bildung von Portionen aus faserigem Gut, insbesondere Tabak, und zur insbesondere taktweisen Befüllung von Aufnahmen (12) eines Förderers (13) mit den gebildeten Portionen, bei dem das Gewicht einer in eine der Aufnahmen (12) zu füllenden Gutportion (35) des faserigen Guts eine vorbestimmte Bedingung erfüllen muss, bei dem eine vorportionierte Grobportion (17) des faserigen Guts einem Grobportionswiegeorgan (19a. 19b) zugeführt und mit dem Grobportionswiegeorgan (19a, 19b) gewogen wird, bei dem für den Fall, dass das Gewicht der gewogenen Grobportion (17) die vorbestimmte Bedingung nicht erfüllt, der Grobportion (17) eine solche zusätzliche Menge faserigen Guts hinzugefügt wird, dass das Gesamtgewicht aus Grobportion (17) und zusätzlicher Menge die vorbestimmte Bedingung erfüllt, und bei dem die Grobportion (17) zusammen mit dieser zusätzlichen Menge als Gutportion (35) in eine der Aufnahmen (12) des Förderers (13) gefüllt wird, **dadurch gekennzeichnet, dass** nach Maßgabe der zu erfüllenden, vorbestimmten Bedingung eine der hinzuzufügenden zusätzlichen Menge entsprechende Feinportion (34) aus faserigem Gut abgewogen wird, die später der gewogenen Grobportion (17) zur Bildung der Gutportion (35) hinzugefügt wird, und dass die Grobportion (17) unmittelbar nach ihrem Wiegen unter Freigabe des Grobportionswiegeorgans (19a, 19b) für einen nächsten Wiegevorgang von dem Grobportionswiegeorgan (19a. 19b) an einen Zwischenspeicher (24a, 24b) übergeben wird, wobei das Abwiegen der Feinportion (34) bereits während der Übergabe der Grobportion (17) an den Zwischenspeicher (24a, 24b) beginnt und wobei sich die Grobportion (17) mindestens zeitweise in dem Zwischenspeicher (24a, 24b) befindet, während die Feinportion (34) abgewogen wird.

2. Verfahren gemäß Anspruch 1, **dadurch gekennzeichnet, dass** die der hinzuzufügenden zusätzlichen Menge entsprechende Feinportion (34) unter Beteiligung eines separaten Feinportionswiegeorgans (30a, 30b) abgewogen wird.

3. Verfahren gemäß einem oder mehreren der vorhergehenden Ansprüche, **dadurch gekennzeichnet, dass** die Gutportion (35) gebildet wird, indem die gewogene Grobportion (17) und die abgewogene Feinportion (34) nach den jeweiligen, separaten Wiege- bzw. Abwiegevorgängen jeweils in dieselbe Aufnahme eines gemeinsamen Förderers (27a, 27b) übergeben werden.

4. Verfahren gemäß einem oder mehreren der vorhergehenden Ansprüche, **dadurch gekennzeichnet, dass** für das Gewicht der abzuwiegenden Feinportion (34) anhand der vorbestimmten Bedingung und anhand des Gewichts der gewogenen Grobportion (17) eine Sollwertvorgabe oder eine Grenzwertvorgabe ermittelt wird.

5. Verfahren gemäß Anspruch 4, **dadurch gekennzeichnet, dass** im Rahmen des Abwiegens einer die Sollwertvorgabe oder die Grenzwertvorgabe erfüllenden Feinportion (34) dem Feinportionswiegeorgan (30a, 30b) eine erste Menge zusätzlichen faserigen Guts zugeführt wird, das Gewicht dieser ersten Menge mit dem Feinportionswiegeorgan (30a, 30b) gemessen wird, und der gemessene Wert mit der Sollwertvorgabe oder der Grenzwertvorgabe verglichen wird.

6. Verfahren gemäß Anspruch 5, **dadurch gekennzeichnet, dass** für den Fall, dass die erste Menge die Sollwertvorgabe oder die Grenzwertvorgabe nicht erfüllt, entweder der ersten Menge eine weitere Menge an faserigem Gut hinzugefügt wird, oder die erste Menge als Fehlportion ausgeschleust wird.

7. Verfahren gemäß Anspruch 6, **dadurch gekennzeichnet, dass** das Gewicht der Gesamtmenge aus erster Menge und weiterer Menge in dem Feinportionswiegeorgan (30a, 30b) gemessen wird, und dass für den Fall, dass die Gesamtmenge die Sollwertvorgabe oder die Grenzwertvorgabe nicht erfüllt, entweder der Gesamtmenge mindestens eine weitere Menge an faserigem Gut hinzugefügt wird oder die Gesamtmenge als Fehlportion ausgeschleust wird.

8. Vorrichtung zur insbesondere taktweisen Bildung von Portionen aus faserigem Gut, insbesondere Tabak, und zur insbesondere taktweisen Befüllung von Aufnahmen (12) eines Förderers (13) mit den gebildeten Portionen, zur Durchführung des Verfahrens gemäß Anspruch 1, mit einem Grobportionswiegeorgan (19a, 19b), mit dem eine vorportionierte Grobportion (17) des faserigen Guts gewogen werden kann, und mit einem Feindosierungsaggregat (33a, 33b), mit dem, falls das Gewicht der gewogenen Grobportion (17) eine vorbestimmte Bedingung für eine in eine der Aufnahmen (12) zu füllende Gutportion (35) nicht erfüllt, der Grobportion (17) eine solche zusätzliche Menge faserigen Guts hinzufügbar ist, dass das Gesamtgewicht aus Grobportion (17) und zusätzlicher Menge die vorbestimmte Bedingung erfüllt, wobei die Grobportion (17) zusammen mit der zusätzlichen Menge als Gutportion (35) später in eine der Aufnahmen (12) des Förderers (13) füllbar ist, **dadurch gekennzeichnet, dass** mit dem Feindosierungsaggregat (33a, 33b) sowie einem dem Feindosierungsaggregat (33a, 33b) zugeordneten Feinportionswiegeorgan (30a, 30b) nach Maßgabe der zu erfüllenden, vorbestimmten Bedingung eine der hinzuzufügenden zusätzlichen Menge entsprechende Feinportion (34) aus faserigem Gut abwiegbar ist, die später der gewogenen Grobportion (17) zur Bildung der Gutportion (35) hinzufügbar ist, und dass stromab des Förderrevolvers (20a, 20b) des Grobportionswiegeorgans (19a, 19b) ein Zwischenspeicher (24a, 24b) angeordnet ist, insbesondere ein Zwischenförderrevolver, bevorzugt ein Zwischenspeicherzellenrad, an den eine in dem Förderrevolver (20a, 20b) des Grobportionswiegeorgans (19a, 19b) angeordnete Grobportion (17) zur Zwischenspeicherung übergebbar ist, wobei die Vorrichtung derart ausgebildet ist, dass das Abwiegen der Feinportion (34) bereits während der Übergabe der Grobportion (17) an den Zwischenspeicher (24a. 24b) beginnt, wobei sich die Grobportion (17) mindestens zeitweise in dem Zwischenspeicher (24a, 24b) befindet, während die Feinportion (34) abgewogen wird.

9. Vorrichtung gemäß Anspruch 8, **dadurch gekennzeichnet, dass** das Grobportionswiegeorgan (19a, 19b) und das Feinportionswiegeorgan (30a, 30b) jeweils über einen eigenen Förderrevolver (20a, 20b, 31a, 31b) verfügen, bevorzugt ein Zellenrad, wobei jeder Förderrevolver (20a, 20b, 31a, 31b) mit jeweils einer Waage (23a, 23b, 32a, 32b) funktional derart zusammenwirkt, dass mit der dem jeweiligen Förderrevolver (20a, 20b, 31a, 31b) jeweils zugeordneten Waage in einer Aufnahme des jeweiligen Förderrevolvers (20a, 20b, 31a, 31b), insbesondere einer Zelle des jeweiligen Zellenrades, befindliches faseriges Gut gewogen werden kann.

10. Vorrichtung gemäß Anspruch 8 oder 9, **dadurch gekennzeichnet, dass** dem Grobportionswiegeorgan (19a, 19b) und dem Feinportionswiegeorgan (30a, 30b) ein gemeinsamer, bevorzugt als Förderrevolver, insbesondere als Zellenrad, ausgebildeter Förderer (27a, 27b) derart zugeordnet ist, dass in eine Aufnahme des Förderers (27a, 27b), insbesondere in eine Zelle des Zellenrades, sowohl eine von dem Grobportionswiegeorgan (19a, 19b) stammende Grobportion (17) als auch eine von dem Feinportionswiegeorgan (30a, 30b) stammende, der vorgenannten Grobportion (17) zugeordnete Feinportion (34) füllbar ist.

11. Vorrichtung gemäß Anspruch 8 und 10, **dadurch gekennzeichnet, dass** der Zwischenspeicher (24a, 24b) in Förderrichtung zwischen dem gemeinsamen Förderer (27a, 27b) und dem Fördererrevolver (20a, 20b) des Grobportionswiegeorgans (19a, 19b) angeordnet ist.

## Claims

1. Method for the in particular cyclical formation of portions from a fibrous material, in particular tobacco, and for the in particular cyclical filling of receptacles (12) of a conveyor (13) using the portions formed, in which method the weight of a good portion (35) of the fibrous material to be filled into one of the receptacles (12) must meet a predetermined condition, in which method a pre-portioned rough portion (17) of the fibrous material is fed to a rough-portion weighing element (19a, 19b) and is weighed by the rough-portion weighing element (19a, 19b), wherein in the case of the weight of the rough portion (17) weighed not meeting the pre-determined condition, such an additional quantity of the fibrous material is added to the rough portion (17) that the total weight of the rough portion (17) and of the additional quantity meets the predetermined condition, and wherein the rough portion (17) together with said additional quantity is filled as the good portion (35) into one of the receptacles (12) of the conveyor (13), **characterized in that,** depending on the predetermined condition to be met, a fine portion (34) of the fibrous material that corresponds to the additional quantity to be added is weighed, said fine portion (34) being added later to the weighed rough portion (17) in order for the good portion (35) to be formed, and **in that** the rough portion (17) directly upon being weighed, while vacating the rough-portion weighing element (19a, 19b) for a subsequent weighing procedure, is transferred from the rough-portion weighing element (19a, 19b) to an intermediate store (24a, 24b), wherein the weighing of the fine portion (34) starts-already during the transfer of the rough portion (17) to the intermediate store (24a, 24b), and wherein the rough portion (17) is at least temporarily located in the intermediate store (24a, 24b) while the fine portion (34) is being weighed.

2. Method according to Claim 1, **characterized in that** the fine portion (34) that corresponds to the additional quantity to be added is weighed with the participation of a separate fine-portion weighing element (30a, 30b).

3. Method according to one or a plurality of the preceding claims, **characterized in that** the good portion (35) is formed **in that** the weighed rough portion (17) and the weighed fine portion (34) following the respective separate weighing procedure each are transferred into the same receptacle of a common conveyor (27a, 27b).

4. Method according to one or a plurality of the preceding claims, **characterized in that** for the weight of the fine portion (34) to be weighed a predefined nominal value or a predefined limit value is determined by means of the predetermined condition and by means of the weight of the weighed rough portion (17).

5. Method according to Claim 4, **characterized in that** in the context of weighing of a fine portion (34) that meets the predefined nominal value or the predefined limit value, a first quantity of additional fibrous material is fed to the fine-portion weighing element (30a, 30b), the weight of this first quantity is measured by the fine-portion weighing element (30a, 30b), and the value measured is compared with the predefined nominal value or the predefined limit value.

6. Method according to Claim 5, **characterized in that** in the case of the first quantity not meeting the predefined nominal value or the predefined limit value, either a further quantity of fibrous material is added to the first quantity or the first quantity is discharged as a rejected portion.

7. Method according to Claim 6, **characterized in that** the weight of the total quantity from the first quantity and from the further quantity is measured in the fine-portion weighing element (30a, 30b), and **in that** in the case of the total quantity not meeting the predefined nominal value or the predefined limit value, either at least one further quantity of fibrous material is added to the total quantity or the total quantity is discharged as a rejected portion.

8. Device for the in particular cyclical formation of portions from a fibrous material, in particular tobacco, and for the in particular cyclical filling of receptacles (12) of a conveyor (13) using the portions formed, for carrying out the method according to Claim 1, said device having a rough-portion weighing element (19a, 19b) by way of which a pre-portioned rough portion (17) of the fibrous material can be weighed, and having a fine-metering apparatus (33a, 33b) by way of which, should the weight of the rough portion (17) weighed not meet a predetermined condition for a good portion (35) to be filled into one of the receptacles (12), such an additional quantity of fibrous material is capable of being added to the rough portion (17) that the total weight from the rough portion (17) and from the additional quantity meets the predetermined condition, wherein the rough portion (17) together with the additional quantity as a good portion (35) is capable of later being filled into one of the receptacles (12) of the conveyor (13), **characterized in that** by way of the fine-metering apparatus (33a, 33b) and a fine-portion weighing element (30a, 30b) that is assigned to the fine-metering apparatus (33a, 33b), depending on the predetermined condition to be met, a fine portion (34) of the fibrous material that corresponds to the additional quantity to be added is capable of being weighed, said fine portion (34) being capable of being later added to the weighed rough portion (17) in order for the good portion (35) to be formed, and **in that** an intermediate store (24a, 24b) in particular an intermediate conveyor turret, preferable an intermediate cellular wheel store, is disposed downstream of the conveyor turret (20a, 20b) of the rough-portion weighing element (19a, 19b), a rough portion (17) that is disposed in the conveyor turret (20a, 20b) of the rough-portion weighing element (19a, 19b) being transferable to said intermediate store (24a, 24b) for intermediate storage, wherein the device is configured in such a manner that the weighing of the fine portion (34) starts already during the transfer of the rough portion (17) to the intermediate store (24a, 24b), wherein the rough portion (17) is at least temporarily located in the intermediate store (24a, 24b) while the fine portion (34) is being weighed.

9. Device according to Claim 8, **characterized in that** the rough-portion weighing element (19a, 19b) and the fine-portion weighing element (30a, 30b) each dispose of a dedicated conveyor turret (20a, 20b, 31a, 31b), preferable a cellular wheel, wherein each conveyor turret (20a, 20b, 31a, 31b) functionally interacts with one balance (23a, 23b, 32a, 32b) in such a manner that fibrous material that is located in a receptacle of the respective conveyor turret (20a, 20b, 31a, 31b), in particular in a cell of the respective cellular wheel, can be weighed by the respective balance that is assigned to the respective conveyor turret (20a, 20b, 31a, 31b).

10. Device according to either of Claims 8 and 9, **characterized in that** the rough-portion weighing element (19a, 19b) and the fine-portion weighing element (30a, 30b) are assigned a common conveyor (27a, 27b) configured preferably as a conveyor turret, in particular as a cellular wheel, in such a manner that both a rough portion (17) that emanates from the rough-portion weighing element (19a, 19b) as well as a fine-portion (34) that emanates from the fine portion weighing element (30a, 30b) and is assigned to the aforementioned rough portion (17) are capable of being filled into a receptacle of the conveyor (27a, 27b), in particular into a cell of the cellular wheel.

11. Device according to Claim 8 and 10, **characterized in that** the intermediate store (24a, 24b) in the conveying direction is disposed between the common conveyor (27a, 27b) and the conveyor turret (20a, 20b) of the rough-portion weighing element (19a, 19b).

## Revendications

1. Procédé pour former en particulier en cadence des portions de matière fibreuse, en particulier de tabac, et pour remplir en particulier en cadence des réceptacles (12) d'un convoyeur (13) avec les portions formées, dans lequel le poids d'une portion de matière (35) de la matière fibreuse à déposer dans un des réceptacles (12) doit remplir une condition prédéterminée, dans lequel on envoie une portion grossière préalablement préparée (17) de la matière fibreuse à un organe de pesage de portions grossières (19a, 19b) et on la pèse avec l'organe de pesage de portions grossières (19a, 19b), dans lequel, dans le cas où le poids de la portion grossière pesée (17) ne remplit pas la condition prédéterminée, on ajoute à la portion grossière (17) une quantité additionnelle de la matière fibreuse, de telle manière que le poids total de la portion grossière (17) et de la quantité additionnelle remplisse la condition prédéterminée, et dans lequel on dépose la portion grossière (17) avec cette quantité additionnelle en tant que portion de matière (35) dans un des réceptacles (12) du convoyeur (13), **caractérisé en ce que**, conformément à la condition prédéterminée à remplir, on pèse une portion fine (34) de matière fibreuse correspondant à la quantité additionnelle à ajouter, que l'on ajoute ultérieurement à la portion grossière pesée (17) pour la formation de la portion de matière (35), et **en ce que** l'on transfère la portion grossière (17) immédiatement après sa pesée, en libérant l'organe de pesage de portions grossières (19a, 19b) pour une prochaine opération de pesage, de l'organe de pesage de portions grossières (19a, 19b) à un récipient intermédiaire (24a, 24b), dans lequel le pesage de la portion fine (34) commence déjà pendant le transfert de la portion grossière (17) au récipient intermédiaire (24a, 24b) et dans lequel la portion grossière (17) se trouve au moins temporairement dans le récipient intermédiaire (24a, 24b), pendant que l'on pèse la portion fine (34).

2. Procédé selon la revendication 1, **caractérisé en ce que** l'on pèse la portion fine (34) correspondant à la quantité additionnelle à ajouter avec la participation d'un organe de pesage de portions fines séparé (30a, 30b).

3. Procédé selon une ou plusieurs des revendications précédentes, **caractérisé en ce que** l'on forme la portion de matière (35), par le fait que l'on transfère la portion grossière pesée (17) et la portion fine pesée (34), après les opérations respectives de pesage grossier et de pesage fin, chaque fois dans le même réceptacle d'un convoyeur commun (27a, 27b).

4. Procédé selon une ou plusieurs des revendications précédentes, **caractérisé en ce que** l'on détermine un niveau de valeur de consigne ou un niveau de valeur limite pour le poids de la portion fine (34) à peser à l'aide de la condition prédéterminée et à l'aide du poids de la portion grossière pesée (17).

5. Procédé selon la revendication 4, **caractérisé en ce que**, dans le cadre du pesage d'une portion fine (34) respectant le niveau de valeur de consigne ou le niveau de valeur limite, on ajoute à l'organe de pesage de portions fines (30a, 30b) une première quantité de matière fibreuse additionnelle, on mesure le poids de cette première quantité avec l'organe de pesage de portions fines (30a, 30b), et on compare la valeur mesurée avec le niveau de valeur de consigne ou le niveau de valeur limite.

6. Procédé selon la revendication 5, **caractérisé en ce que**, dans le cas où la première quantité ne respecte pas le niveau de valeur de consigne ou le niveau de valeur limite, soit on ajoute à la première quantité une autre quantité de matière fibreuse soit on élimine la première quantité au titre de portion défectueuse.

7. Procédé selon la revendication 6, **caractérisé en ce que** l'on mesure le poids de la quantité totale de la première quantité et de l'autre quantité dans l'organe de pesage de portions fines (30a, 30b), et **en ce que**, dans le cas où la quantité totale ne respecte pas le niveau de valeur de consigne ou le niveau de valeur limite, soit on ajoute à la quantité totale au moins une autre quantité de matière fibreuse soit on élimine la quantité totale au titre de portion défectueuse.

8. Dispositif pour former en particulier en cadence des portions de matière fibreuse, en particulier de tabac et pour le remplissage en particulier en cadence de réceptacles (12) d'un convoyeur (13) avec les portions formées, pour la mise en oeuvre du procédé selon la revendication 1, avec un organe de pesage de portions grossières (19a, 19b), avec lequel une portion grossière préalablement préparée (17) de la matière fibreuse peut être pesée, et avec une unité de dosage fin (33a, 33b) avec laquelle, dans le cas où le poids de la portion grossière pesée (17) ne remplit pas une condition prédéterminée pour une portion de matière (35) à déposer dans un des réceptacles (12), une quantité additionnelle de la matière fibreuse peut être ajoutée à la portion grossière (17), de telle manière que le poids total de la portion grossière (17) et de la quantité additionnelle remplisse la condition prédéterminée, dans lequel la portion grossière (17) avec la quantité additionnelle peut ultérieurement être déposée au titre de portion de matière (35) dans un des réceptacles (12) du convoyeur (13), **caractérisé en ce qu'**il est possible de peser avec l'unité de dosage fin (33a, 33b) ainsi qu'avec un organe de pesage de portions fines (30a, 30b) associé à l'unité de dosage fin (33a, 33b), conformément à la condition prédéterminée à remplir, une portion fine (34) de matière fibreuse correspondant à la quantité additionnelle à ajouter, qui peut être ajoutée ultérieurement à la portion grossière pesée (17) pour la formation de la portion de matière (35), et **en ce qu'**un récipient intermédiaire (24a, 24b) est disposé en aval du carrousel de transport (20a, 20b) de l'organe de pesage de portions grossières (19a, 19b), en particulier un carrousel de transport intermédiaire, de préférence une roue à cellules de stockage intermédiaire, auquel une portion grossière (17) disposée dans le carrousel de transport (20a, 20b) de l'organe de pesage de portions grossières (19a, 19b) peut être transférée pour le stockage intermédiaire, dans lequel le dispositif est configuré de telle manière que le pesage de la portion fine (34) commence déjà pendant le transfert de la portion grossière (17) au récipient intermédiaire (24a, 24b), dans lequel la portion grossière (17) se trouve au moins temporairement dans le récipient intermédiaire (24a, 24b), pendant que l'on pèse la portion fine (34).

9. Dispositif selon la revendication 8, **caractérisé en ce que** l'organe de pesage de portions grossières (19a, 19b) et l'organe de pesage de portions fines (30a, 30b) comportent respectivement leur propre carrousel de transport (20a, 20b, 31a, 31b), de préférence une roue à cellules, dans lequel chaque carrousel de transport (20a, 20b, 31a, 31b) coopère de façon fonctionnelle avec respectivement une balance (23a, 23b, 32a, 32b), de telle manière que la matière fibreuse se trouvant dans un réceptacle du carrousel de transport respectif (20a, 20b, 31a, 31b), en particulier une cellule de la roue à cellules respective, puisse être pesée avec la balance associée respectivement au carrousel de transport respectif (20a, 20b, 31a, 31b).

10. Dispositif selon la revendication 8 ou 9, **caractérisé en ce qu'**un convoyeur commun (27a, 27b), réalisé de préférence en forme de carrousel de transport, en particulier de roue à cellules, est associé à l'organe de pesage de portions grossières (19a, 19b) et à l'organe de pesage de portions fines (30a, 30b), de telle manière qu'aussi bien une portion grossière (17) provenant de l'organe de pesage de portions grossières (19a, 19b) qu'une portion fine (34), associée à la portion grossière précitée (17), provenant de l'organe de pesage de portions fines (30a, 30b), puisse être déposée dans un réceptacle du convoyeur (27a, 27b), en particulier dans une cellule de la roue à cellules.

11. Dispositif selon la revendication 8 et 10, **caractérisé en ce que** le récipient intermédiaire (24a, 24b) est disposé dans la direction de transport entre le convoyeur commun (27a, 27b) et le carrousel de transport (20a, 20b) de l'organe de pesage de portions grossières (19a, 19b).
